(19) Europäisches Patentamt
European Patent Office
Office européen des brevets

(11) EP 2 826 271 B1

(12) EUROPEAN PATENT SPECIFICATION

(45) Date of publication and mention
of the grant of the patent:
**10.05.2017 Bulletin 2017/19**

(51) Int Cl.:
***H04W 16/14*** (2009.01)   ***H04L 1/20*** (2006.01)

(21) Application number: **12871303.9**

(86) International application number:
**PCT/JP2012/069056**

(22) Date of filing: **19.07.2012**

(87) International publication number:
**WO 2013/136549 (19.09.2013 Gazette 2013/38)**

(54) **Improved detection of a primary user transmission**

Verbesserte Erkennung einer Übertragung eines Primärnutzers

Détection améliorée d'une transmission d'un utilisateur principal

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2012 GB 201204422**

(43) Date of publication of application:
**21.01.2015 Bulletin 2015/04**

(73) Proprietor: **NEC Corporation**
**Tokyo 108-8001 (JP)**

(72) Inventors:
- **PANAITOPOL, Dorin**
  **Reading**
  **Berkshire RG2 0TD (GB)**
- **BAGAYOKO, Abdoulaye**
  **Reading**
  **Berkshire RG2 0TD (GB)**

(74) Representative: **MacDougall, Alan John Shaw et al**
**Mathys & Squire LLP**
**The Shard**
**32 London Bridge Street**
**London SE1 9SG (GB)**

(56) References cited:
JP-A- 2010 011 350      JP-A- 2010 258 621
US-A1- 2008 166 974      US-A1- 2008 268 892
US-A1- 2010 317 391

- YI ZHENG ET AL: "Cooperative Spectrum Sensing Based on SNR Comparison in Fusion Center for Cognitive Radio", ADVANCED COMPUTER CONTROL, 2009. ICACC '09. INTERNATIONAL CONFERENCE ON, IEEE, PISCATAWAY, NJ, USA, 22 January 2009 (2009-01-22), pages 212-216, XP031420735, ISBN: 978-1-4244-3330-8
- YUNFEI CHEN: "Analytical Performance of Collaborative Spectrum Sensing Using Censored Energy Detection", IEEE TRANSACTIONS ON WIRELESS COMMUNICATIONS, IEEE SERVICE CENTER, PISCATAWAY, NJ, US, vol. 9, no. 12, 1 December 2010 (2010-12-01), pages 3856-3865, XP011338540, ISSN: 1536-1276, DOI: 10.1109/TWC.2010.100110.100473
- YI ZHENG: 'Cooperative Spectrum Sensing Based on SNR Comparison in Fusion Center for Cognitive Radio' ADVANCED COMPUTER CONTROL, 2009. ICACC '09. INTERNATIONAL CONFERENCE ON 24 January 2009, pages 212 - 216, XP031420735

EP 2 826 271 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention relates to a communications system and to parts and methods thereof. The invention has particular, although not exclusive relevance to cognitive radio systems and devices thereof.

**Background Art**

In wireless communications, traditionally, licensing gave systems exclusive access to distinct blocks of the electromagnetic spectrum. This is a good way to eliminate the danger of harmful interference but it can leave the majority of the allocated block of spectrum underused when and where the license holder is not active.

In order to use spectrum holes (parts of the spectrum where the licensees are not active for a given time), the idea of opportunistic access to spectrum was suggested. This idea involves two different kinds of spectrum users: legitimate users (or primary licensed users), and secondary users (or cognitive users) which are allowed to use a part of the spectrum only if the primary users are not using it or only if the generated interference (to the primary users) is acceptable.

A Cognitive Radio Device has been defined as a terminal which is aware of its electro-magnetic environment and able to adapt its transmission accordingly. A Cognitive Radio Device may sense a specific frequency band in order to estimate its occupancy and take a decision whether it transmits or not. However, the primary signals to be detected are subject to different environment changes (shadowing, fading, path loss) and therefore sometimes primary licensed users are very difficult to detect by a single cognitive radio device. In such a situation, the primary transmitter is considered to be "hidden" (i.e., hidden primary transmitter) from the sensing device, and therefore the use of a single sensing device is unlikely to provide a reliable decision.

If the primary user transmits using low power and narrow bandwidth (as may be the case with so called "PMSE (programme making and special events)" devices, such as wireless microphones), sensing can be unreliable except for sensing devices located near the PMSE device.

To try to address these issues, others have proposed a cooperative approach where a number of geographically distributed sensor nodes (which may also be secondary users) are used to sense for the primary transmitter over a wider area and report back to a master node that decides whether or not secondary users can operate within the licensed band. WO 2007/031956 A2 discloses an example of this kind of cooperative system.

Yi Zheng et al ("Cooperative Spectrum Sensing Based on SNR Comparison in Fusion Center for Cognitive Radio", 22 January 2009) discloses a cooperative spectrum sensing algorithm based on SNR comparison in fusion center for cognitive radio based on an analysis of the effects of cognitive nodes' SNRs on cooperative sensing.

US 2010/317391 A1 discloses a WRAN that discriminates between authentic incumbent and spurious/malicious signals by collaboratively sensing the frequency environment, classifying and fusing the sensed results, and categorizing each signal as valid or invalid. The WRAN categorises signals according to reports from at least two nodes. A "voting-rule" can be applied whereby a signal is authentic only if it is detected by a specified percentage of the nodes. Signals can be categorised by comparing sensed analog signal properties, such as amplitude, bandwidth, pulse width, mean, variance, modulation, standard deviation, moments, cumulants, and rise and fall times, with properties of known incumbents and/or known incumbent types. Sensed results can be weighted according to known node locations and/or local topology, sensed signal strengths, and comparisons of sensed analog features with corresponding features of known incumbents and/or known incumbent types in the same class.

**Summary of Invention**

**Technical Problem**

Once a decision has been made that the primary user is not present and that the secondary users can use the licensed band, the secondary users start using the licensed band. However, after this non-licensed communication starts, the sensor nodes have to sense again for the apparition of the primary users. In this context, there are two approaches that can be used to detect primary user apparition. One approach is for the secondary users to include a "quiet period" to allow the sensor nodes to be able to try to detect primary user transmissions in the licensed band, without the presence of the secondary user transmissions. The other approach is for the sensor nodes to try to detect the primary user transmissions in the presence of the secondary user transmissions.

The first approach requires simpler and faster detection techniques to be used by the sensor nodes, but it reduces the quality of service that can be provided by the secondary user system. In particular, the first approach requires all the secondary users to synchronise to stop transmitting during a certain period; otherwise false alarms are probable as sensor nodes will mistake secondary user transmissions as primary user transmissions. Therefore, this stopping of all secondary user transmissions, affects the quality of service (QoS) offered by the secondary user communication system. Such quiet periods also directly affect QoS parameters, such as the transmission delay, and make it unsuitable for delay sensitive communications such as voice calls or other data streaming services. However, other services, such as File Transfer Protocol (FTP) or internet browsing are not much affected by such quiet periods.

The second approach requires the sensor nodes to use more complex and slower detection techniques to discriminate between primary user transmissions and secondary user transmissions; so that the sensor nodes can continue to decode useful data from another secondary node at the same time as detecting a primary user transmission.

In one aspect the invention aims to improve the operation of a secondary user communications system that uses the second approach outlined above - where sensor nodes try to detect primary user transmissions by discriminating between primary user transmissions and secondary user transmissions using, for example, signal classification techniques.

**Solution to Problem**

According to one aspect, the present invention provides a master node for use with a plurality of sensor nodes, the master node comprising: obtaining means for obtaining, for each sensor node, a measure of a signal to noise ratio, SNR, of secondary user transmissions received at the sensor node; receiving means for receiving detection information from sensor nodes, the detection information received from a sensor node indicating whether or not the sensor node has sensed a primary user transmission; determining means for determining detection reliability of each sensor node using the obtained SNR measure of the secondary user transmissions for the corresponding sensor node; selecting means for selecting a subset of the plurality of sensor nodes based on the detection reliabilities determined by said determining means; and decision means for deciding if primary user transmissions are being transmitted using the detection information that has been received from the subset of the sensor nodes.

The obtaining means may obtain the SNR measure for a particular sensor node by receiving the measure from that sensor node or (from another network node) or it may estimate the SNR measure from signals received from the sensor node or from another network node.

The master node may include a controller for controlling operation of the master node and the sensor nodes in dependence upon a decision made by said decision means. The controller may control the operation of the master node and the sensor nodes to stop them transmitting in a frequency band licensed for use by the primary user if the decision means decides that a primary user is transmitting. The controller may control a transmission power and/or a transmission direction of the master node in a frequency band of the primary user transmission in order to avoid interference to the primary user. The controller may control sensing parameters of the sensor nodes to vary the number of sensor nodes that provide reliable detection information. The controller may also send control information to at least one sensor node to control the way in which the sensor node performs the sensing operation, in order to vary the number of sensor nodes that provide reliable detection information. The controller may send control information that changes the sensing interval over which the sensor node senses for the primary user transmission or that changes the bandwidth of a receiving filter used by the sensor node to filter the signals that it receives.

The master node may have a smart antenna that can steer transmissions made by the master node and the master node may temporarily steer its transmissions away from at least one sensor node to allow the at least one sensor node to make a reliable determination whether or not it has sensed a primary user transmission.

In one embodiment, the determining means determines detection reliability for a sensor node using the obtained SNR measure for the sensor node and stored data that relates the obtained SNR measure to reliability obtained during trial and/or simulation period.

In one embodiment, the master node sends a command to the subset of sensor nodes to cause them to process their received signals to detect the presence of a primary user transmission and generate their detection information and the receiving means may only receive detection information from the selected subset of sensor nodes. In this way, sensor nodes that are likely to produce unreliable detections do not need to perform any analysis of the received signal, thereby saving battery power in that sensor node.

Alternatively, the receiving means may receive respective detection information from the plurality of sensor nodes and the decision means may make its decision only using the detection information received from the subset of sensor nodes.

Also disclosed is a master node for use with a plurality of sensor nodes, the master node comprising: receiving means for receiving, from a plurality of the sensor nodes, detection information indicating whether or not the sensor node has sensed a primary user transmission; obtaining means for obtaining, for each sensor node, a measure of a signal to noise ratio, SNR, of secondary user signals received at the sensor node; checking means for checking reliability of the detection information received from the plurality of sensor nodes using the obtained SNR measure for the corresponding sensor node; and decision means for deciding if a primary user is transmitting using a subset of the received detection information that has been determined to be reliable by said checking means.

Also disclosed is a master node for use with a plurality of sensor nodes, the master node comprising: obtaining means for obtaining, for each sensor node, a measure of a signal to noise ratio, SNR, of secondary user signals received at the sensor node; determining means for determining detection reliability of each sensor node using the obtained SNR measure for the corresponding sensor node; selecting means for selecting a subset of the plurality of sensor nodes based on the detection reliabilities determined by said determining means; command means for sending a command to the subset of sensor nodes to cause the subset of sensor nodes to process the signals received thereby to detect if the primary user is currently transmitting; receiving means for receiving detection information from the subset of sensor nodes, the detection information received from a sensor node indicating whether or not the sensor node has sensed a primary user transmission; and decision means for deciding if a primary user is transmitting using the detection information that has been received from the subset of the sensor nodes.

The invention also provides a sensor node for use with a master node, the sensor node and master node being operable to communicate with each other within a licensed operating band of a primary transmitter, the sensor node comprising: analysis means for analysing signals received at the sensor node to distinguish between secondary user transmissions and primary user transmissions and to generate detection information indicative of whether or not the sensor node has detected a primary user transmission; determining means for determining a measure of a signal to noise ratio, SNR, of secondary user transmissions received by the senor node; and reporting means for reporting the determined SNR measure and the generated detection information to the master node.

The determining means may determine a measure of a signal to noise ratio, SNR, of signals received from the master node or from other secondary users.

The sensor node may also comprise checking means for checking reliability of the generated detection information using the determined SNR measure and wherein said reporting means is arranged to report the detection information only if the checking means determines that the detection information is reliable. The checking means may check the reliability of the detection information using the obtained SNR measure and stored data that relates the obtained SNR measure to reliability obtained during a trial and/or simulation period.

The reporting means may also report position information for the sensor node to the master node. The master node may use this to determine an estimate of the SNR of signals received by the sensor node from the secondary users. The reporting means may report the SNR measure separately from the detection information. For example, the analysis means may perform its analysis only if the sensor node receives a command from the master node to perform the analysis. This command may be sent in response to the sensor node sending the SNR measure.

The invention provides, for all methods disclosed, corresponding computer programs or computer program products for execution on corresponding equipment, the equipment itself (user equipment, master node, mobile nodes or components thereof) and methods of updating the equipment.

## Advantageous Effects of Invention

According to the present invention, it is possible to at least improve the operation of a secondary user communications system that uses the second approach outlined above.

## Brief Description of Drawings

[Fig. 1]

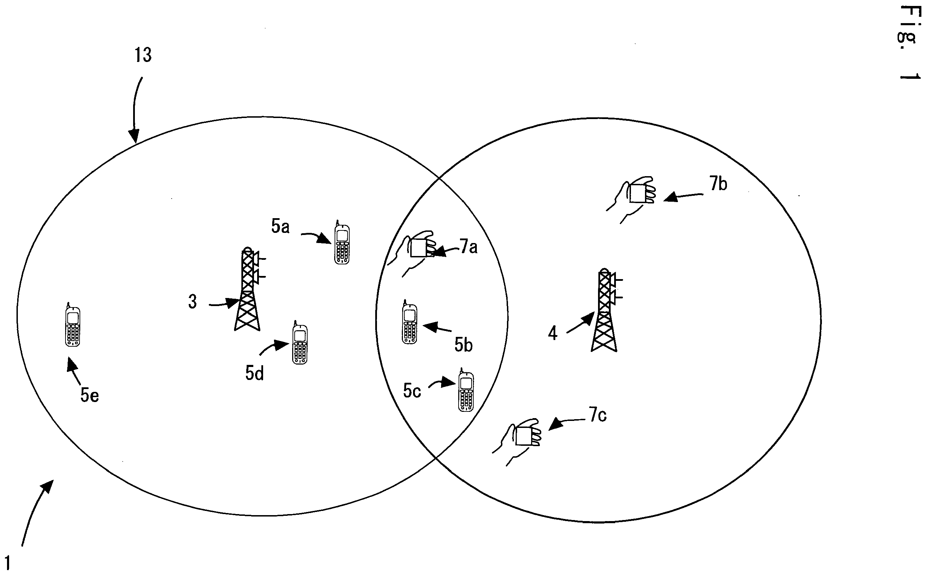

Fig. 1 illustrates coverage areas of a master node and a primary transmitter and an overlapping region in which interference may occur.
[Fig. 2]

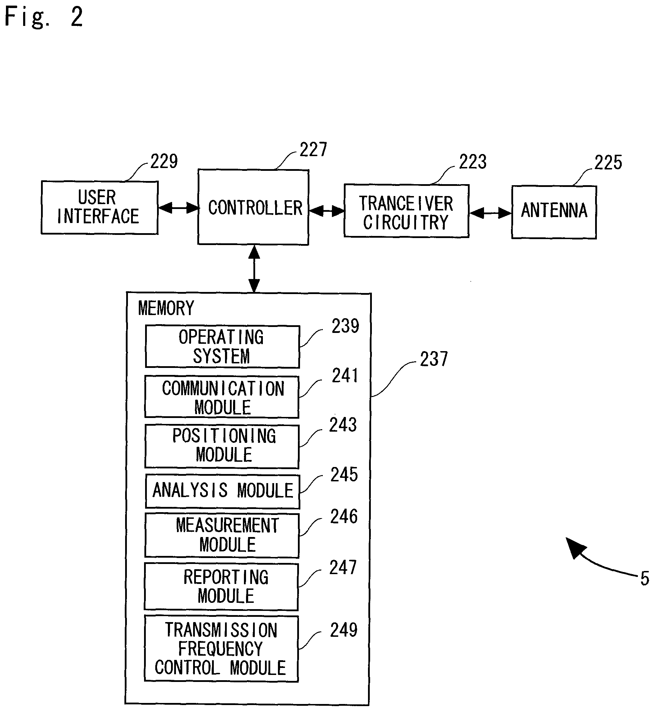

Fig. 2 is a block diagram illustrating the main components of a sensor mobile terminal shown in Fig. 1.
[Fig. 3]

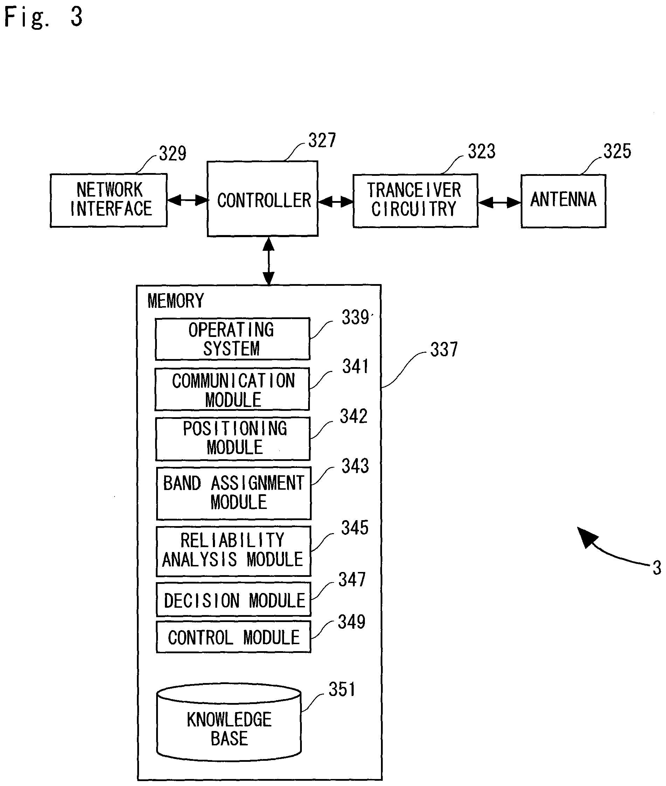

Fig. 3 is a block diagram illustrating the main components of the master node shown in Fig. 1.
[Fig. 4A]

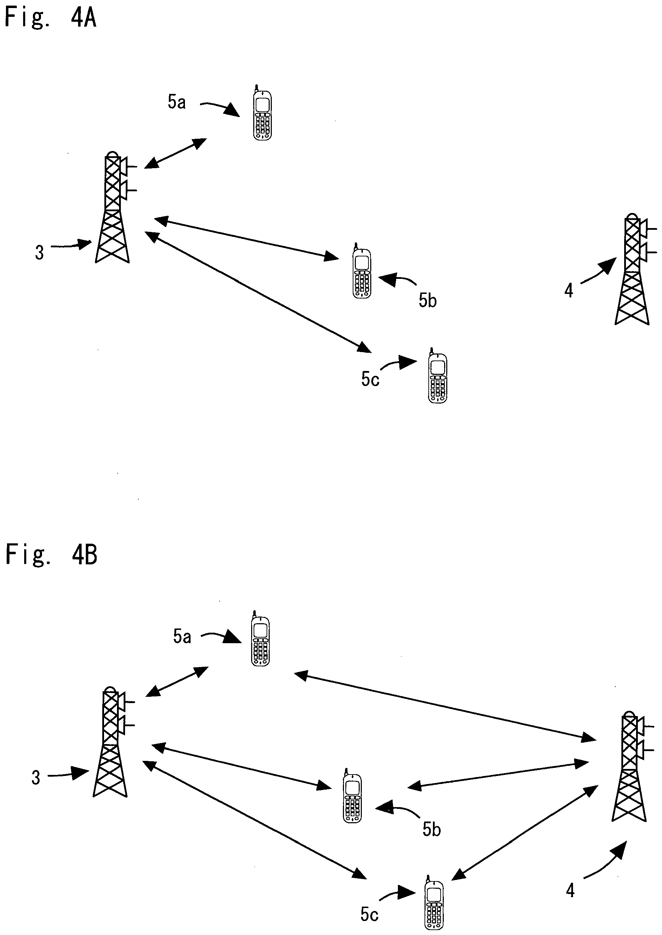

Fig. 4A illustrates operation of the master node and the sensor nodes when the primary transmitter is not transmitting.
[Fig. 4B]
Fig. 4B illustrates operation of the master node and the sensor nodes when the primary transmitter is transmitting.
[Fig. 5A]

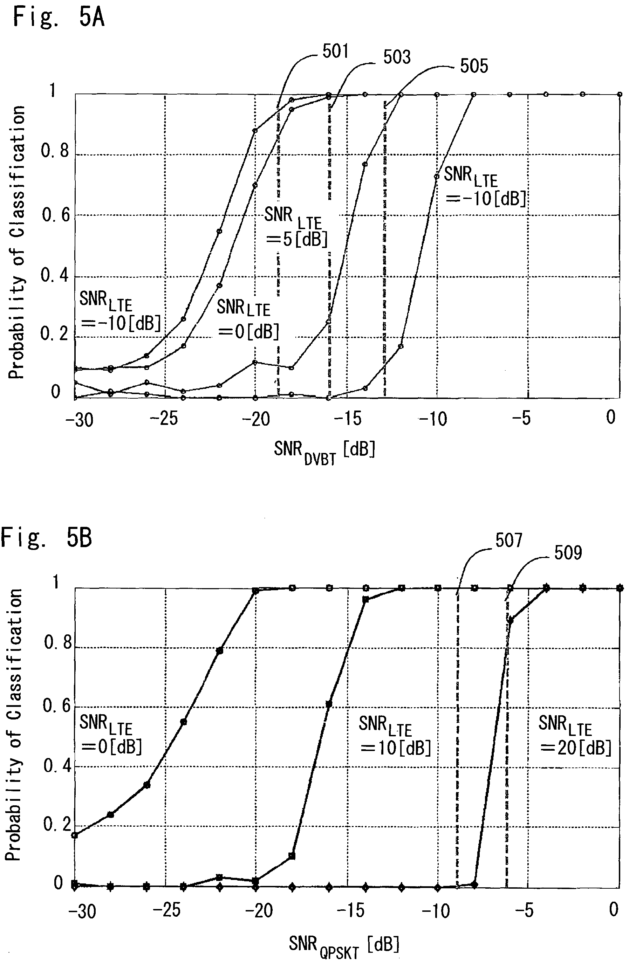

Fig. 5A illustrates stored simulation data that is used by the master node to determine reliability of determinations made by sensor mobile terminals when sensing a DVB-T primary transmitter.
[Fig. 5B]

Fig. 5B illustrates stored simulation data that is used by the master node to determine reliability of determinations made by sensor mobile terminals when sensing a PMSE primary transmitter that uses QPSK modulation with an RRC filter.

[Fig. 5C]

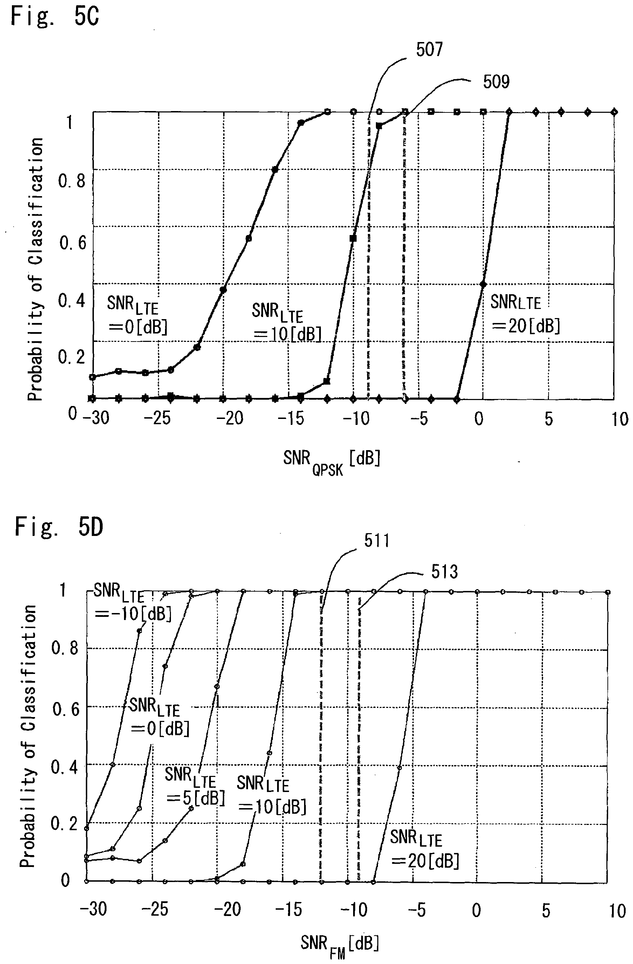

Fig. 5C illustrates stored simulation data that is used by the master node to determine reliability of determinations made by sensor mobile terminals when sensing a PMSE primary transmitter that uses QPSK modulation without an RRC filter.

[Fig. 5D]

Fig. 5D illustrates stored simulation data that is used by the master node to determine reliability of determinations made by sensor mobile terminals when sensing a PMSE primary transmitter that uses FM modulation.

[Fig. 5E]

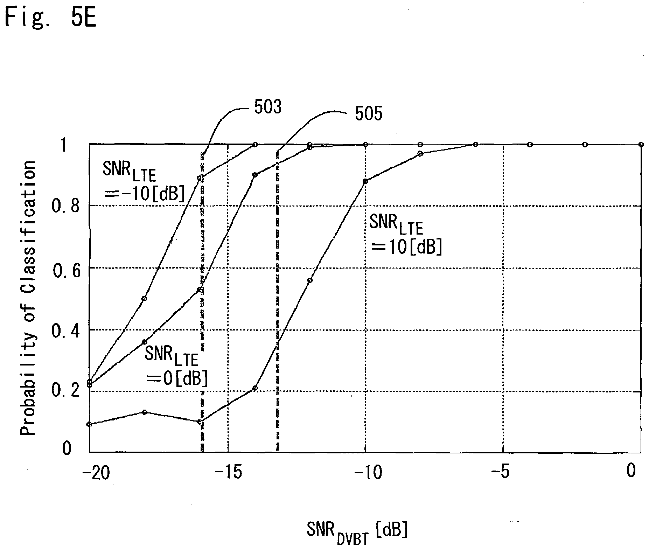

Fig. 5E illustrates stored simulation data that is used by the master node to determine reliability of determinations made by sensor mobile terminals when sensing a DVB-T primary transmitter for a different sensing interval.

## Description of Embodiments

Exemplary embodiments of the invention will now be described, by way of example, with reference to the accompanying drawings.

[Overview]

Fig. 1 schematically illustrates a cognitive wireless communication network 1 that has a master node 3 and a plurality of mobile terminals 5 (marked as 5a-5e) within an area 13 controlled by the master node 3. The master node 3 and the mobile terminals 5 are secondary users of a frequency band (B) that is licensed to one or more primary users. The primary users will typically include a wideband primary transmitter 4 that transmits over the whole or any part of its licensed frequency band (B) and primary user equipment 7 (marked as 7a-7c) that transmit or receive signals over different channels within the licensed band (B). As an example, the licensed band (B) may correspond to a television channel (DVB-T operating on e.g., 6 MHz or 8 MHz channels) and the wideband primary transmitter 4 will transmit over a number of channels whilst the primary user equipment 7 receives the transmitted signal in the whole or any part of the licensed band. Some primary user equipment 7, such as PMSE (Programme Making Special Event) devices) may also transmit within sub-bands (e.g. 200 kHz or 400 kHz sub-bands) of the larger 6 MHz or 8 MHz television channel.

Transmissions of the mobile terminals 5 are controlled by the master node 3. The secondary users are able to communicate within all or a part of the frequency band (B) whilst the primary users are not transmitting in all or that part of the band (B); or as long as the interference caused by the transmissions of the secondary users is acceptable to the primary users. Typically the master node 3 will be fixed in location and the mobile terminals 5 can move. In the preferred embodiment, the master node 3 is a cellular telephone base station that operates in accordance with the Long Term Evolution (LTE) standards and the mobile terminals 5 are LTE user equipment, such as cellular telephones and the like.

Some or all of the mobile terminals 5 are arranged to act as sensor nodes (hereinafter referred to as sensor mobile terminals 5) that are able to sense for primary user transmissions within the licensed frequency band (B). The sensor mobile terminals 5 report measurement results and determinations made back to the master node 3 which then decides if it is allowable for any of the secondary users to transmit in any part of the licensed band (B).

As will be described in more detail below, various data and control information is transmitted between the master node 3 and the mobile terminals 5 in multiple frequency bands, including the frequency band (B) licensed to the primary user. Further, as the mobile terminals 5 are able to move around within the area 13 controlled by the master node 3, the master node 3 keeps track of the location of the mobile terminals 5 either continuously, periodically or from time to time to ensure that communication between the master node 3 and the mobile terminals 5 can be maintained. When the mobile terminals 5 are leaving the area 13 controlled by the master node 3, transmission of data and control information is handed over to another master node (not shown) that is able to maintain transmission of data and control information with the mobile terminals 5. Similarly, a handover procedure to the master node 3 will be performed for mobile devices 5 entering the area 13 served by the master node 3. Handover might also be initiated for mobile terminals 5 that are still within the area 13 controlled by the master node 3 for various reasons that are well known to the person skilled in the art.

Whilst the master node 3 is typically installed at a fixed location, and hence it is able to make measurements at a single location, the sensor mobile terminals 5 can provide measurements for their current location as they move around in the area 13 controlled by the master node 3. Sensor mobile terminals 5 may be closer to the primary transmitter 4, 7 than the master node 3 and thus may make a more accurate detection and measurement of the primary user transmission. If a primary user transmission is detected, then the master node 3 will take the necessary control action to prevent or at least reduce interference in the licensed band (B). For example, the master node 3 may simply arrange all secondary users to stop transmitting in the licensed band (or a specific sub-band of the licensed band). Alternatively, the master node 3 may take a more complex control action, for example, reducing its transmission power in the licensed band (B), or taking different control actions for different mobile terminals depending on their location relative to the detected primary user. For some of the mobile terminals 5, the required control action may be to stop transmitting in the licensed frequency band (B), for others the required control action may be to reduce their transmission power in the licensed frequency band (B), for others the required control action may be to hand them over to another cell operating on a different frequency. Alternatively, the master node 3 may change the operating frequency of the entire cell.

In a simpler embodiment, only the master node 3 transmits its data (downlink data) in the licensed band (B) to the mobile terminals 5; and the mobile terminals 5 transmit their data (uplink data) to the master node 3 outside the licensed frequency band (B). This is simpler as only the master node 3 needs to stop transmitting (or reduce transmission power or change transmission frequency) in the licensed band upon detection of a primary user transmission.

As will be described in more detail below, in this embodiment, the master node 3 makes the decision about whether or not a primary user transmission has been detected by using the detection results from one or more sensor mobile terminals 5, whilst excluding the detection results from one or more other sensor mobile terminals 5 that are considered to provide unreliable detection results. In particular, the master node 3 excludes from the decision process, those detection results that have been received from sensor mobile terminals 5 that have a high signal to noise ratio for the secondary user transmissions.

[Sensor Mobile Terminal]

Fig. 2 is a block diagram illustrating the main components of a sensor mobile terminal 5, shown in Fig. 1. As shown, the sensor mobile terminal 5 includes transceiver circuitry 223 which is operable to transmit signals to and to receive signals from other nodes (e.g. the master node 3) via one or more antennas 225. A controller 227 controls the operation of the transceiver circuitry 223 in accordance with software stored in memory 237. The sensor mobile terminal 5 also includes a user interface 229 that is controlled by the controller 227 and which allows a user to interact with the communication device. The software stored in memory 237 includes, among other things, an operating system 239, a communication module 241, a positioning module 243, an analysis module 245, a measurement module 246, a reporting module 247 and a transmission frequency control module 249.

The operating system 239 controls the operation of the sensor mobile terminal 5. The communication module 241 controls communications between the mobile terminal 5 and external devices via the transceiver circuitry 223 and the antenna 225. The positioning module 243 operates to determine location information for the sensor mobile terminal 5. It may be a GPS or similar satellite or terrestrial location determining module. The positioning module 243 sends regular position updates to the master node 3 either on demand or at predetermined time intervals. The analysis module 245 operates to analyse the received signals and to distinguish between transmissions made by primary users 4, 7 and transmissions made by secondary users 3, 5. The analysis module 245 will normally be able to sense for primary user transmissions within the entire licensed band (B) (and perhaps in other frequency bands as well). The measurement module 246 is arranged to measure the signal to noise ratio of the secondary user signal ($SNR_{SU}$). The measurements made by the measurement module 246 and detections made by the analysis module 245 are then transmitted back to the master node 3 by the reporting module 247. Finally, the transmission frequency control module 249 operates to receive control information transmitted from the master node 3 for controlling the frequency band in which the sensor mobile terminal 5 should transmit and receive signals from the master node 3 and/or other secondary users.

[Analysis Module]

When the analysis module 245 is determining if the received signal includes a primary user transmission, it compares one or more test statistics derived from the signal samples, with respective thresholds. If the received signal contains only noise, then the test statistics should be lower than the respective thresholds; otherwise the test statistics should be greater than the respective thresholds.

The performance of the detection is generally measured by a false alarm probability and a detection probability. The false alarm probability is the probability that the analysis module 245 decides a primary signal is present when there is actually no primary signal in the analyzed frequency band. The detection probability is the probability that the analysis module decides a primary signal is present while a primary signal is actually present in the analyzed frequency band. The main challenge of the analysis module 245 is to have the detection probability as high as possible, and the false alarm probability as small as possible.

In this embodiment, the sensor node 5 stores various data calculated off-line (or supplied by the master node 3) for the different types of primary signals that may be detected. The data will define, for each different type of primary signal, a sensing duration Ts over which the sensing is to be performed and a target probability of false detection (Target Pf). Typically the sensing duration Ts will be between 1 ms and few seconds. The target false alarm probability is a value, between 0 and 1, used to compute the decision threshold for making the detection decision, for a given type of primary signal, such that the actual mean false alarm probability does not exceed the maximum allowed false alarm probability Pf,max. This desired maximum probability of false detection depends on the individual primary user (in terms of allowed interference - as defined by the appropriate regulatory authority) and on the desired reliability of the secondary user traffic. If it is set at a high value (say 0.5), then interference to the primary user will be low but secondary user communications will be interrupted frequently leading to poor performance (e.g., mean throughput) for secondary data communication. If it is set at a low value (say 0.01), then there will be better reliability for secondary user data communication but the primary user is likely to experience more interference compared to the previous case. Typically, but not compulsory, Pf,max will be set between 0.01 and 0.2.

In this embodiment, the analysis module 245 analyses the received samples to detect for the presence of certain cyclo-stationary features in the received signal. These features are normally non-random spectral or temporal features (such as those related to the symbol period, modulation type etc.) that will be present when the primary signal is present and that are different from similar signal features of the secondary user transmissions. A cyclo-stationary analysis will typically analyse different variants of the Cyclic Autocorrelation Function (CAF), depending on parameters such as order, cyclic frequencies, delays, number of conjugates. For example, the Generalized Likelihood Ratio Test (GLRT) algorithm for second order cyclo-stationary detection (CD2) computes the covariance matrix $\sum_r(\alpha)$ where $r$ is the received signal and $\alpha$ is the cyclic frequency. Based on this covariance matrix, the method uses the test statistic:

[Math. 1]

$$ N \cdot \underline{r}_{rr}^{\alpha}(\tau) \cdot inv\left(\sum\nolimits_{r}(\alpha)\right) \cdot \underline{r}_{rr}^{\alpha}(\tau)^{T} $$

where $\underline{r}_{rr}^{\alpha}(\tau) = \left[\operatorname{Re}\left\{R_{rr}^{\alpha}(\tau)\right\}, \operatorname{Im}\left\{R_{rr}^{\alpha}(\tau)\right\}\right]$, with $R_{rr}^{\alpha}(\tau)$ the CAF of the signal $r$ for cyclic frequency $\alpha$ and delay $\tau$, $N$ is the number of the received samples, $inv()$ describes the inverse of a matrix and T is the transpose operation. The test statistic is then compared with a threshold $\gamma$, which is obtained from:

[Math. 2]

Target Pf $= 1-\Gamma(1,\gamma/2)$

where Target Pf is the target false alarm probability and $\Gamma$ is the incomplete gamma function.

In other embodiments a fourth order cyclo-stationary detection process may be used instead of or in addition to the second order cyclo-stationary detection process discussed above and particularly when trying to detect a PMSE primary user signal.

[Master Node]

Fig. 3 is a block diagram illustrating the main components of the master node 3, shown in Fig. 1. As shown, the master node 3 includes transceiver circuitry 323 which is operable to transmit signals to and to receive signals from other nodes via one or more antennas 325. A controller 327 controls the operation of the transceiver circuitry 323 in accordance with software stored in memory 337. The controller 327 is also able to communicate with other network communications devices via a network interface 329. The software stored in memory 337 includes, among other things, an operating system 339, a communication module 341, a positioning module 342, a band assignment module 343, a reliability analysis module 345, a decision module 347 and a control module 349. The memory 337 also includes a knowledge base 351 that includes simulation data obtained in advance during a simulation period.

The operating system 339 is operable to control the general operation of the master node 3. The communication module 341 provides the functionality to allow the master node 3 to communicate with the mobile terminals 5 via the transceiver circuitry 323 and the antenna 325 and to communicate with other network devices and nodes via the network interface 329 (which may be a copper or optical fiber interface). The positioning module 342 allows the master node 3 to determine the location of the different mobile terminals 5, including the sensor mobile terminals 5 - either from measurements received from the mobile terminals 5 or by triangulation from signals transmitted to or received from the mobile terminals 5 by a plurality of network nodes (such as the master node 3). The band assignment module 343 operates to assign available frequency bands to mobile terminals 5 within the cell 13 controlled by the master node 3. The reliability analysis module 345 operates to receive the detection results and the SNR measurements back from the different sensor mobile terminals 5 and to determine the reliability of the results using the SNR measurements and the stored simulation data 351. The decision module 347 then decides whether or not a primary user has started transmitting in the licensed band (B) using sensor results that are determined to be reliable whilst excluding the sensor results that are determined to be un-reliable. This decision can be made in a number of different ways. For example, the decision module 347 may decide that a primary user is transmitting if any of the reliable sensor mobile terminals 5 have detected a primary user signal or it may decide that a primary user is transmitting if more than a predefined percentage of the reliable sensor mobile terminals 5 have detected a primary user signal. The control module 349 operates, in response to the decision output by the decision module 347, to control the operation of the master node 3 and the mobile nodes 5 to minimise or reduce interference to the primary users of the licensed band (B).

In the above description, the master node 4 and the mobile terminals 5 have been described, for ease of understanding, as having a number of discrete modules (such as the communication modules, the positioning modules, the analysis module, the reporting module etc). Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities.

[Reliability Determination]

A more detailed description of the way in which the master node 3 determines if the detection results received from the sensor mobile terminals 5 are reliable, will now be given with reference to Figs. 4A, 4B, and 5A to 5E.

Fig. 4A illustrates the situation when the primary user 4 is not transmitting in the licensed band (B) and Fig. 4B illustrates the situation when the primary user 4 is transmitting in the licensed frequency band (B). In this embodiment, each of the sensor mobile terminals 5 is arranged to make signal measurements and report to the master node 3 during consecutive sensing intervals. During each sensing interval (such as at the start of the sensing interval), each sensor mobile terminal 5 measures the SNR of the signal it receives in the licensed frequency band (B). During the rest of the sensing interval, each sensor mobile terminal 5 analyses the signals it receives in the licensed frequency band and classifies them into different signal types to determine if the received signal includes the signal transmitted by a primary user 4, 7. If a primary user signal is not detected by the sensor mobile device 5 in a current sensing interval, then the sensor mobile device 5 sends the master node the determined SNR measurement and information indicating that the sensor mobile terminal 5 has not sensed any primary user signals in the current sensing interval.

If there are no primary user transmissions in the current sensing interval, then the SNR measurement that the sensor mobile terminal 5 makes corresponds to the SNR of the secondary user signal that the sensor mobile terminal 5 has received (i.e. $SNR_{SU}$). However, if a primary user 4, 7 is transmitting during a sensing interval, then the SNR measured by the sensor mobile terminals 5 in that interval will not correspond to $SNR_{SU}$ as the received signal will include both the primary user signal and the secondary user signal. Therefore, when a sensor mobile terminal 5 detects a primary user signal in the licensed frequency band, there is no need for the sensor mobile terminal 5 to send the SNR measurement that it has made for that sensing interval. Instead, in this embodiment, the sensor mobile terminal 5 sends an SNR measurement made in a previous sensing interval when the primary user signal was not present.

At the end of a sensing interval, the master node 3 processes the information received from the different sensor mobile terminals 5 and checks the reliability of the determinations based on the received $SNR_{SU}$ values from the sensor mobile terminals 5 and the data held in the knowledge base 351.

In particular, during an off-line simulation process, an analysis is made of the reliability of detections made by sensor mobile terminals 5 under different measurement conditions including:

1) different secondary user signal to noise ratios ($SNR_{SU}$)
2) different primary user signal to noise ratios ($SNR_{PU}$)
3) different sensing interval durations
4) different bandwidths of the sensor mobile terminals
5) different sampling rates
6) different primary user signals (e.g. DVBT can be for example of 5 MHz, 6 MHz, 7 MHz or 8 MHz configuration; PMSE can be of 200 kHz or 400 kHz, analogue or digital, using different transmission parameters such as different modulation index in the case of FM or different roll-off factors in the case of the QPSK, QAM or other digital modulations)

As discussed above, the regulatory authorities define parameters that must be met by secondary users 3, 5 to ensure that they do not interfere with the primary users 4, 7. Some regulatory authorities define a minimum received power of the primary user signal that a sensor mobile terminal 5 must be able to detect. This can be equated to a minimum $SNR^{PU}_{min}$ as follows:

[Math. 3]

$$SNR_{\min}^{PU} = \frac{P_{\min}^{PU} / NF}{KTB_f}$$

Where $P^{PU}_{min}$ is the regulatory defined minimum power of a primary user signal that a sensor mobile terminal 5 should be able to detect; NF is the Noise Figure of the receiver used in the sensor terminal 5; K is the Boltzman constant; T is the absolute temperature; and $B_f$ is the bandwidth of a filter used in the sensor mobile terminal 5 to filter the received signal. If the SNR of the primary user signal that is required by the sensor mobile terminal 5 to reach a detection probability of 90% is defined as $SNR^{PU}_{req}$, then in order for a sensor mobile terminal 5 to be able to provide a reliable detection it is necessary that:

[Math. 4]

$$SNR_{\min}^{PU} \geq SNR_{req}^{PU}$$

$SNR^{PU}_{req}$ depends on the analysis technique used by the sensor mobile terminal 5, the sensing interval during which the analysis is performed, the bandwidth of the sensor node receiver filter, the sampling rate etc. Therefore, knowing the regulatory requirements for a given primary user 4, 7, the master node 3 can determine, for different analysis techniques, for different sensing intervals, for different receiver bandwidths etc, an $SNR^{PU}_{min}$ value that can be used to work out what $SNR_{SU}$ levels will allow the sensor mobile terminal 5 to be able to make a reliable detection.

For example, in the case of a 5 MHz LTE implementation, the following table 1 of $SNR^{PU}_{min}$ values can be determined for different types of primary user signals based on the 2010 FCC requirement for $P_{min}$:

[Table 1]

|  | Primary Signal Bandwidth | $P^{PU}_{min}$ | Filter Bandwidth ($B_f$) | Noise Density (KT) | NF | $SNR^{PU}_{min}$ |
|---|---|---|---|---|---|---|
| DVB-T | 7.6 MHz | -114 dBm | 3.84x2=7.68 MHz =68.86 dBHz | -174 dBm/Hz | 7 dB | - 15.86 dB (503) |
| DVBT | 7.6 MHz | -114 dBm | 3.84x2=7.68 MHz =68.86 dBHz | -174 dBm/Hz | 4 dB | - 12.86 dB (505) |
| PMSE QPSK | 400 kHz | -104 dBm (from 200 kHz value) | 3.84x2=7.68 MHz =68.86 dBHz | -174 dBm/Hz | 7 dB | - 5.86 dB (509) |
| PMSE FM | 200 kHz | -107 dBm | 3.84x2=7.68 MHz =68.86 dBHz | -174 dBm/Hz | 7 dB | - 8.86 dB (513) |

In the case of a 10 MHz LTE implementation, the following table 2 of $SNR^{PU}_{min}$ values can be determined for different types of primary user signals based on the 2010 FCC requirements for $P_{min}$:

[Table 2]

|  | Primary Signal Bandwidth | $P^{PU}_{min}$ | Filter Bandwidth ($B_f$) | Noise Density (KT) | NF | SNRmin |
|---|---|---|---|---|---|---|
| DVB-T | 7.6 MHz | -114 dBm | 3.84x4=15.36 MHz=71.86 dBHz | -174 dBm/Hz | 7 dB | - 18.86 dB (501) |
| PMSE QPSK | 400 kHz | -104 dBm (from 200 kHz value) | 3.84x4=15.36 MHz=71.86 dBHz | -174 dBm/Hz | 7 dB | - 8.86 dB (507) |

(continued)

|  | Primary Signal Bandwidth | $P^{PU}_{min}$ | Filter Bandwidth ($B_f$) | Noise Density (KT) | NF | SNRmin |
|---|---|---|---|---|---|---|
| PMSE FM | 200 kHz | -107 dBm | 3.84x4=15.36 MHz=71.86 dBHz | -174 dBm/Hz | 7 dB | -11.86 dB (511) |

Fig. 5A to Fig. 5E illustrate different graphs or data sets that form part of the simulation data stored in the knowledge base 351 for different types of primary user signal. As shown, there are different curves (or data sets) for different $SNR_{SU}$ values and different primary user signal types. The graphs show that the probability of a sensor mobile terminal 5 detecting the corresponding primary user signal, for a given signal to noise ratio of the primary user signal, increases as the signal to noise ratio of the secondary user signal decreases. Put another way, if the signal to noise ratio of the secondary user signal ($SNR_{SU}$) received at a sensor mobile terminal 5 is high, then the detection reliability of that sensor mobile terminal 5 will be low.

Fig. 5A illustrates the graphs that are maintained in the knowledge base 351 for a DVB-T primary user signal obtained for a sensing interval of 250 ms; and shows the $SNR^{PU}_{min}$ values 501, 503 and 505 from the above tables. Fig. 5B illustrates the graphs that are maintained in the knowledge base 351 for a PMSE primary user signal (with QPSK modulation and without using a Root Raised Cosine (RRC) filter) obtained for a sensing interval of 250ms; and shows the $SNR^{PU}_{min}$ values 507 and 509 from the above tables. Fig. 5C illustrates the graphs that are maintained in the knowledge base 351 for a PMSE primary user signal (with QPSK modulation and using a Root Raised Cosine (RRC) filter) obtained for a sensing interval of 250 ms; and shows the $SNR^{PU}_{min}$ values 511 and 513 from the above tables. Fig. 5D illustrates the graphs that are maintained in the knowledge base 351 for a PMSE primary user signal (with FM modulation) obtained for a sensing interval of 250ms; and shows the $SNR^{PU}_{min}$ values 515 and 517 from the above tables. Similar graphs will be stored for different sensing intervals. For example, Fig. 5E illustrates the graphs that are maintained in the simulation data store 351 for a DVB-T primary user signal obtained for a sensing interval of 50 ms; and shows the $SNR^{PU}_{min}$ values 503 and 505 from the above tables.

Therefore, for a given $SNR_{SU}$ for a sensor mobile terminal 5, if the corresponding curve does not reach the detection probability imposed by the regulatory body for the primary user signal under consideration (if the intersection between the curve for that $SNR_{SU}$ and appropriate dashed line (501 to 517) is less than the required detection probability, e.g. 90%), then the master node 3 concludes that the detection result received from that sensor mobile terminal 5 will be un-reliable and so it excludes that detection result from the final decision that the master node 3 makes. Of course, the simulation data held in the knowledge base 351 will not include curves for all possible $SNR_{SU}$ values and the master node 3 can use known techniques to interpolate between the curve data contained in the knowledge base 351 for any given $SNR_{SU}$ value received from a sensor mobile terminal 5.

[Modifications and Alternatives]

Detailed embodiments have been described above. As those skilled in the art will appreciate, a number of modifications and alternatives can be made to the above embodiments whilst still benefiting from the inventions embodied therein. By way of illustration only a number of these alternatives and modifications will now be described.

As described above, the curves illustrated in Figs. 5A to 5E depend on, among other things, the sensing interval during which the sensor mobile terminals 5 analyse the received signal and the bandwidth of the receiver used in the sensor mobile terminal 5. Therefore, if the master node 3 determines that too many sensor mobile terminals 5 are providing reliable results, the master node 3 may instruct one or more of the sensor mobile terminals 5 to reduce the sensing interval or to increase the receiver bandwidth in order to reduce the number of sensor mobile terminals 5 providing reliable results. This can be seen by comparing Fig. 5E (for a sensing interval of 50 ms) with Fig. 5A (for a sensing interval of 250 ms), as reducing the sensing interval from 250 ms to 50 ms, reduces the number of $SNR_{SU}$ curves that intersect the $SNR^{PU}_{min}$ vertical lines 503/505 above the detection threshold (90% for example). Similarly, if the master node 3 determines that too few sensor mobile terminals 5 are providing reliable results, the master node 3 may instruct one or more of the sensor mobile terminals 5 to increase the sensing interval or to reduce the receiver bandwidth in order to increase the number of sensor mobile terminals 5 providing reliable results. Additionally or alternatively, if the master node 3 employs smart antennas that can steer the transmissions that the master node makes, the master node 3 can temporarily reduce the $SNR_{SU}$ that a given sensor mobile terminal 5 will experience by steering the signal transmitted by the master node 3 away from that sensor mobile terminal 5. This will allow the sensor terminal 5 to be able to make a more reliable determination whilst its $SNR_{SU}$ has a lower than normal value. The master node 3 may do this for all sensor terminals 5 or for just those sensor terminals 5 that currently have a large $SNR_{SU}$ value.

In the above embodiment, the master node used simulation data and $SNR_{SU}$ data for a sensor node to determine if the determination information received from that sensor node is reliable. Instead of simulation data, the data stored in the knowledge base 351 may be obtained by experimentation or trial in a deployed system.

In the above embodiment, each sensor mobile terminal was arranged to process the signal within the entire licensed frequency band (B). In other embodiments, each sensor mobile terminal may be configured (typically by the master node) to sense in one or more sub-bands of the licensed band (B); with the master node using the results from the different sensor terminals to determine the presence of the different types of primary user signals.

In the above embodiment, each sensor terminal reported the detection of a primary user signal and a type of primary user signal that has been detected. In a simpler embodiment, there may only be one type of primary user signal that a sensor terminal is designed to detect and in this case, there is no need for the sensor terminal to send primary user type information to the master node when informing that the primary user signal has been detected.

In the above embodiment, the sensor terminals estimated $SNR_{SU}$ and passed this information back to the master node 3. In an alternative embodiment, the master node 3 may estimate $SNR_{SU}$ for each sensor terminal and so the sensor terminals do not need to send their $SNR_{SU}$ information back to the master node. For example, the master node may use knowledge about the transmission power of the sensor terminal and signal levels received from the sensor terminal to estimate a path loss between the sensor terminal and the master node and from that estimate an $SNR_{SU}$ level for the sensor terminal, given the master node's known transmission power. Alternatively, the master node may use current position information (e.g. distance from the master node) for the sensor terminal on its own or in combination with pre-stored terrain information that indicates the master node's signal transmission characteristics for different locations within its cell 13, and knowledge of the master node's transmission power to work out an estimate of $SNR_{SU}$ for each sensor mobile terminal 5. In a simpler embodiment, the master node may obtain an estimate of $SNR_{SU}$ simply by using the distance between the sensor terminal and the master node. For example, the master node 3 may decide that sensor terminals that are too close to the master node 3 will provide unreliable primary user signal discrimination because the received signal power from the master node will be too high; and accordingly exclude one or more sensor nodes based on their distance from the master node 3. The master node may use information about its own transmitter power to determine the threshold of what is "too close" in this context or it may just apply a fixed threshold. Alternatively, the master node 3 may receive an estimate of the $SNR_{SU}$ for one or more of the sensor mobile terminals 5 from another communications node in the network.

In some embodiments, a sensor terminal may receive secondary user signals from more than one master node. In this case, it is preferred that the sensor terminal measures its own $SNR_{SU}$ value and then sends it to the or each master node.

In the above embodiments, the master node stored various simulation data that it used to determine if the detection results obtained from different sensor terminals are reliable. In an alternative embodiment, the master node 3 may pre-process the simulation data and determine a threshold value for each primary user signal, sensing duration and receiver bandwidth combination, such that if the received $SNR_{SU}$ is below the corresponding threshold the master node assumes that the sensor node has made a reliable detection and if it is above the threshold then the master node 3 assumes that the sensor mobile terminal 5 has not made a reliable detection.

In the above embodiment, the sensor mobile terminals measured the signal to noise ratio of the secondary user signal received thereby. In an alternative embodiment, the sensor terminal may obtain a measure of the received signal strength or/and a measure of the received noise and pass this back to the master node, for use in calculating the signal to noise ratio (SNRsu).

In the above embodiments, the sensor terminal calculated $SNR_{SU}$ when the primary user was not transmitting. In other embodiments, the sensor mobile device can use different techniques to determine a measure of $SNR_{SU}$ even when a primary user is transmitting. For example, the sensor terminal can user source separation techniques (such as ICA, JADE, FastICA, eigenvalue etc) to separate the signals from the different sources and then work out the $SNR_{SU}$ for the signals received from the secondary user(s). The sensor nodes may also estimate $SNR_{SU}$ from their distance from the master node and path loss information and the transmission power of the master node. The sensor nodes may also estimate $SNR_{SU}$ from measurements made directly on pilot signals or other signals transmitted by the master node in a nearby frequency band.

In the above embodiments, each sensor terminal reported its detection information and $SNR_{SU}$ information to the master node and the master node determined which sensor nodes provide reliable detection information using the received $SNR_{SU}$ information. In an alternative embodiment, one or more of the sensor terminals may determine the reliability of their own detection information from its determined $SNR_{SU}$ information and may decide not to send its detection information to the master node if it decides that its own detection information is not reliable. In such an embodiment, the sensor nodes would not send the $SNR_{SU}$ information to the master node and the master node would just make the final decision based on the detection information that it receives. In such an embodiment, the sensor nodes could include the knowledge base and the reliability analysis module described above.

In the above embodiments, the master node determined which sensor terminals give reliable determinations (of primary user signal detection), based on an SNR measure for the secondary user signal received at that sensor terminal ($SNR_{SU}$). In an alternative embodiment, each sensor terminal may just report its $SNR_{SU}$ value to the master node (or the master node may estimate the $SNR_{SU}$ value for each sensor node, in the manner described above) and based on the obtained $SNR_{SU}$ for the different sensor terminals and the stored simulation data, the master node may decide which sensor terminals are likely to provide reliable detections. In response to making this decision, the master node may then instruct a subset of the sensor nodes (the subset that the master node determines will provide reliable measurements) to perform the signal processing required to detect if they have received a primary user signal. The master node then makes the final decision about whether or not a primary user has started transmitting based on the reliable determinations made from the selected sensor terminals and takes the appropriate control action accordingly. The advantage of this alternative is that sensor terminals that are likely to make an unreliable determination do not need to process the received signal to make the determination, thereby saving, for example, battery power of that sensor terminal and needless communications over the air interface.

In the above embodiments, the sensor terminals used cyclo-stationary detection techniques to detect the presence of the different types of primary user signals in the received signals and to distinguish them from the transmissions of the secondary users. These detection techniques rely on computing the second order or fourth order cyclic autocorrelation functions (CAF). Alternatively other signal features may be detected using other detection techniques such as autocorrelation, cyclo-spectrum etc. Those skilled in the art of signal classification will be aware of other classification techniques that can be used.

In the above embodiments, all of the sensor mobile terminals used to sense for primary user transmissions were secondary users - i.e. they transmitted in the licensed band (B) as well as sensing in the licensed band (B). In other embodiments, one or more of the sensor mobile terminals may not be secondary users. Instead, they may simply sense within the licensed band (B) and report their sensing results in a band outside the licensed frequency band (B).

In the above embodiment, the sensor terminals were mobile - i.e. they could move around relative to the master node (and the primary users). In some embodiments, one or more of the sensor terminals may be in a fixed position relative to the master node and/or the primary users.

In an embodiment where the invention is implemented in an LTE system, the master node will typically be formed by an LTE base station. Multiple base stations are provided in an LTE system and they may each operate as masters controlling sensor mobile terminals (typically user devices such as cellular telephones) within its cell(s). The base stations may operate autonomously in a de-centralised manner taking decisions about their respective localities without communicating with a higher network entity. The base stations may also co-operate with each other exchanging information over their "X2" interface and taking decisions based on information received from neighbouring base stations.

In the above embodiments, a number of nodes have been described. As those skilled in the art will appreciate, such nodes may comprise any kind of communications node or device, including access points and user devices such as, for example, mobile telephones, personal digital assistants, laptop computers, tablet computers, web browsers, etc.

In the above embodiments, a number of software modules were described. As those skilled in the art will appreciate, the software modules may be provided in compiled or un-compiled form and may be supplied to the communications node as a signal over a computer network, or on a recording medium, such as on a CD or DVD disc. Further, the functionality performed by part or all of this software may be performed using one or more dedicated hardware circuits. However, the use of software modules is preferred as it facilitates the updating of the node in order to update its functionality. Similarly, although the above embodiments employed transceiver circuitry, at least some of the functionality of the transceiver circuitry can be performed by software.

Various other modifications will be apparent to those skilled in the art and will not be described in further detail here.

For example, the present invention can be materialized by a program for causing a computer such as a CPU (Central Processing Unit) to execute the processes described in the above embodiment.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM, CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

**Industrial Applicability**

The present invention can be applied to a communication system, and particular applied to cognitive radio systems and devices thereof.

**Reference Signs List**

| | |
|---|---|
| 1 | COGNITIVE WIRELESS COMMUNICATION NETWORK |
| 3 | MASTER NODE |
| 4 | WIDEBAND PRIMARY TRANSMITTER |
| 5a-5e | MOBILE TERMINALS |
| 7a-7c | PRIMARY USER EQUIPMENT |
| 13 | AREA |
| 223 | TRANCEIVER CIRCUITRY |
| 225 | ANTENNA |
| 227 | CONTROLLER |
| 229 | USER INTERFACE |
| 237 | MEMORY |
| 239 | OPERATING SYSTEM |
| 241 | COMMUNICATION MODULE |
| 243 | POSITIONING MODULE |
| 245 | ANALYSIS MODULE |
| 246 | MEASUREMENT MODULE |
| 247 | REPORTING MODULE |
| 249 | TRANSMISSION FREQUENCY CONTROL MODULE |
| 323 | TRANCEIVER CIRCUITRY |
| 325 | ANTENNA |
| 327 | CONTROLLER |
| 329 | NETWORK INTERFACE |
| 337 | MEMORY |
| 339 | OPERATING SYSTEM |
| 341 | COMMUNICATION MODULE |
| 342 | POSITIONING MODULE |
| 343 | BAND ASSIGNMENT MODULE |
| 345 | RELIABILITY ANALYSIS MODULE |
| 347 | DECISION MODULE |
| 349 | CONTROL MODULE |
| 351 | KNOWLEDGE BASE |
| 501,503,505,507, 509,511,513,515,517 | $SNR^{PU}_{min}$ VALUE |

**Claims**

1. A master node for use with a plurality of sensor nodes (5), the master node (3) being operable to communicate with the sensor nodes (5) within a licensed operating band of a primary transmitter, the master node (3) comprising:

    obtaining means for obtaining, for each sensor node (5), a measure of a signal to noise ratio, SNR, of secondary user transmissions received at the sensor node (5);
    receiving means for receiving detection information from sensor nodes (5), the detection information received from a sensor node (5) indicating whether or not the sensor node (5) has sensed a primary user transmission;
    determining means for determining detection reliability of each sensor node (5) using the obtained SNR measure of the secondary user transmissions for the corresponding sensor node (5);
    selecting means for selecting a subset of the plurality of sensor nodes (5) based on the detection reliabilities determined by said determining means; and
    decision means for deciding if primary user transmissions are being transmitted using the detection information that has been received from the subset of the sensor nodes (5).

2. The master node according to claim 1, wherein the obtaining means is arranged to obtain the SNR measure for a particular sensor node (5) by receiving the measure from that sensor node (5).

3. The master node according to claim 1, wherein the obtaining means is operable to obtain the SNR measure for a particular sensor node (5) by calculating the measure using position information for the sensor node (5).

4. The master node according to any one of claims 1 to 3, further comprising control means for controlling operation of the master node (3) and the sensor nodes (5) in dependence upon a decision made by said decision means.

5. The master node according to claim 4, wherein the control means is operable to control the operation of the master node (3) and the sensor nodes (5) to stop them transmitting in a frequency band licensed for use by the primary user if said decision means decides that a primary user is transmitting.

6. The master node according to any one of claims 4 to 5, wherein the control means is arranged to control sensing parameters of the sensor nodes (5) to vary the number of sensor nodes (5) that provide reliable detection information.

7. A sensor node for use with a master node (3), the sensor node (5) being operable to communicate with the master node (3) within a licensed operating band of a primary transmitter, the sensor node (5) comprising:

   analysis means for analysing signals received at the sensor node (5) to distinguish between secondary user transmissions and primary user transmissions and to generate detection information indicative of whether or not the sensor node (5) has detected a primary user transmission;
   determining means for determining a measure of a signal to noise ratio, SNR, of secondary user transmissions received by the sensor node; and
   reporting means for reporting the determined SNR measure and the generated detection information to the master node (3).

8. The sensor node according to claim 7, wherein the determining means is arranged to determine a measure of a signal to noise ratio, SNR, of signals received from the master node (3).

9. A method performed by a master node (3) that communicates with a plurality of sensor nodes (5) within a licensed operating band of a primary transmitter, the method comprising:

   obtaining, for each sensor node (5), a measure of a signal to noise ratio, SNR, of secondary user transmissions received at the sensor node (5);
   receiving detection information from sensor nodes (5), the detection information received from a sensor node (5) indicating whether or not the sensor node (5) has sensed a primary user transmission;
   determining detection reliability of each sensor node (5) using the obtained SNR measure for the corresponding sensor node (5);
   selecting a subset of the plurality of sensor nodes (5) based on the detection reliabilities determined by said determining means; and
   deciding if a primary user is transmitting using the detection information that has been received from the subset of the sensor nodes (5).

10. The method according to claim 11, wherein the obtaining step obtains the SNR measure for a particular sensor node (5) by receiving the measure from that sensor node (5).

11. The method according to any one of claims 9 to 10, further comprising controlling operation of the master node (3) and the sensor nodes (5) in dependence upon a decision made in said deciding step.

12. A method performed by a sensor node that communicates with a master node (3) within a licensed operating band of a primary transmitter, the method comprising:

   analysing signals received at the sensor node (5) to distinguish between secondary user transmissions and primary user transmissions and to generate detection information indicative of whether or not the sensor node (5) has detected a primary user transmission;
   determining a measure of a signal to noise ratio, SNR, of secondary user transmissions received by the senor node; and
   reporting the determined SNR measure and the generated detection information to the master node (3).

**Patentansprüche**

1. Hauptknoten für die Verwendung mit mehreren Sensorknoten (5), wobei der Hauptknoten (3) betriebsfähig ist, um innerhalb eines lizenzierten Betriebsbands eines Primärsenders mit den Sensorknoten (5) zu kommunizieren, wobei der Hauptknoten (3) aufweist:

   eine Gewinnungseinrichtung, um für jeden Sensorknoten (5) eine Messung eines Signal-Rausch-Verhältnisses SNR von Sekundärnutzerübertragungen, die an dem Sensorknoten (5) empfangen werden, zu gewinnen;
   eine Empfangseinrichtung zum Empfangen von Erfassungsinformationen von Sensorknoten (5), wobei die Erfassungsinformationen, die von einem Sensorknoten (5) empfangen werden, angeben, ob der Sensorknoten (5) eine Primärnutzerübertragung detektiert hat oder nicht;
   eine Bestimmungseinrichtung zum Bestimmen der Erfassungszuverlässigkeit jedes Sensorknotens (5) unter Verwendung der gewonnenen SNR-Messung der Sekundärnutzerübertragungen für den entsprechenden Sensorknoten (5);
   eine Auswahleinrichtung zum Auswählen einer Teilmenge der mehreren Sensorknoten (5) basierend auf den von den Bestimmungseinrichtungen bestimmten Erfassungszuverlässigkeiten; und
   eine Entscheidungseinrichtung, um unter Verwendung der Erfassungsinformationen, die von der Teilmenge der Sensorknoten (5) empfangen wurden, zu entscheiden, ob Primärnutzerübertragungen übertragen werden.

2. Hauptknoten nach Anspruch 1, wobei die Gewinnungseinrichtung eingerichtet ist, um die SNR-Messung für einen bestimmten Sensorknoten (5) zu gewinnen, indem die Messung von diesem Sensorknoten (5) empfangen wird.

3. Hauptknoten nach Anspruch 1, wobei die Gewinnungseinrichtung eingerichtet ist, um die SNR-Messung für einen bestimmten Sensorknoten (5) zu gewinnen, indem die Messung unter Verwendung von Positionsinformationen für den Sensorknoten (5) berechnet wird.

4. Hauptknoten nach einem der Ansprüche 1 bis 3, der ferner eine Steuereinrichtung zum Steuern des Hauptknotens (3) und der Sensorknoten (5) in Abhängigkeit von einer Entscheidung, die von der Entscheidungseinrichtung getroffen wird, aufweist.

5. Hauptknoten nach Anspruch 4, wobei die Steuereinrichtung betriebsfähig ist, um den Betrieb des Hauptknotens (3) und der Sensorknoten (5) zu steuern, um ihre Übertragung in einem Frequenzband, das für die Verwendung durch den Primärnutzer lizenziert ist, zu stoppen, wenn die Entscheidungseinrichtung entscheidet, dass ein Primärnutzer überträgt.

6. Hauptknoten nach einem der Ansprüche 4 bis 5, wobei die Steuereinrichtung eingerichtet ist, um Abtastparameter der Sensorknoten (5) zu steuern, um die Anzahl von Sensorknoten (5), die zuverlässige Erfassungsinformationen bereitstellen, zu verändern.

7. Sensorknoten für die Verwendung mit einem Hauptknoten (3), wobei der Sensorknoten (5) betriebsfähig ist, um innerhalb eines lizenzierten Betriebsbands eines Primärsenders mit dem Hauptknoten (3) zu kommunizieren, wobei der Sensorknoten (5) aufweist:

   eine Analyseeinrichtung zum Analysieren von Signalen, die an dem Sensorknoten (5) empfangen werden, um zwischen Sekundärnutzerübertragungen und Primärnutzerübertragungen zu unterscheiden und um Erfassungsinformationen zu erzeugen, die anzeigen, ob der Sensorknoten (5) eine Primärnutzerübertragung detektiert hat oder nicht;
   eine Bestimmungseinrichtung zum Bestimmen einer Messung eines Signal-Rausch-Verhältnisses SNR von Sekundärnutzerübertragungen, die von dem Sensorknoten empfangen werden; und
   eine Meldungseinrichtung zum Melden der bestimmten SNR-Messung und der erzeugten Erfassungsinformationen an den Hauptknoten (3).

8. Sensorknoten nach Anspruch 7, wobei die Bestimmungseinrichtung eingerichtet ist, um eine Messung eines Signal-Rausch-Verhältnisses SNR von Signalen zu bestimmen, die von dem Hauptknoten (3) empfangen werden.

9. Verfahren, das von einem Hauptknoten (3) durchgeführt wird, der innerhalb eines lizenzierten Betriebsbands eines Primärsenders mit mehreren Sensorknoten (5) kommuniziert, wobei das Verfahren aufweist:

für jeden Sensorknoten (5) Gewinnen einer Messung eines Signal-Rausch-Verhältnisses SNR von Sekundärnutzerübertragungen, die an dem Sensorknoten (5) empfangen werden;

Empfangen von Erfassungsinformationen von Sensorknoten (5), wobei die Erfassungsinformationen, die von einem Sensorknoten (5) empfangen werden, angeben, ob der Sensorknoten (5) eine Primärnutzerübertragung detektiert hat;

Bestimmen der Erfassungszuverlässigkeit jedes Sensorknotens (5) unter Verwendung der gewonnenen SNR-Messung für den entsprechenden Sensorknoten (5);

Auswählen einer Teilmenge der mehreren Sensorknoten (5) basierend auf den von den Bestimmungseinrichtungen bestimmten Erfassungszuverlässigkeiten; und

unter Verwendung der Erfassungsinformationen, die von der Teilmenge der Sensorknoten (5) empfangen wurden, Entscheiden, ob ein Primärnutzer überträgt.

10. Verfahren nach Anspruch 11, wobei der Gewinnungsschritt die SNR-Messung für einen bestimmten Sensorknoten (5) gewinnt, indem die Messung von diesem Sensorknoten (5) empfangen wird.

11. Verfahren nach einem der Ansprüche 9 bis 10, das ferner den Steuerbetrieb des Hauptknotens (3) und der Sensorknoten (5) in Abhängigkeit von einer in dem Entscheidungsschritt getroffenen Entscheidung aufweist.

12. Verfahren, das von einem Sensorknoten durchgeführt wird, der innerhalb eines lizenzierten Betriebsbands eines Primärsenders mit einem Hauptknoten (3) kommuniziert, wobei das Verfahren aufweist:

Analysieren von Signalen, die an dem Sensorknoten (5) empfangen werden, um zwischen Sekundärnutzerübertragungen und Primärnutzerübertragungen zu unterscheiden und um Erfassungsinformationen zu erzeugen, die anzeigen, ob der Sensorknoten (5) eine Primärnutzerübertragung detektiert hat oder nicht;

Bestimmen einer Messung eines Signal-Rausch-Verhältnisses SNR von Sekundärnutzerübertragungen die von dem Sensorknoten empfangen werden; und

Melden der bestimmten SNR-Messung und der erzeugten Erfassungsinformationen an den Hauptknoten (3).

## Revendications

1. Noeud maître pour une utilisation avec une pluralité de noeuds de capteur (5), le noeud maître (3) étant exploitable pour communiquer avec les noeuds de capteur (5) dans une bande d'exploitation autorisée d'un émetteur primaire, le noeud maître (3) comprenant :

un moyen d'obtention pour obtenir, pour chaque noeud de capteur (5), une mesure d'un rapport signal sur bruit, RSB, de transmissions d'utilisateur secondaire reçues au niveau du noeud de capteur (5) ;

un moyen de réception pour recevoir des informations de détection à partir des noeuds de capteur (5), les informations de détection reçues à partir d'un noeud de capteur (5) indiquant si le noeud de capteur (5) a détecté ou non une transmission d'utilisateur primaire ;

un moyen de détermination pour déterminer une fiabilité de détection de chaque noeud de capteur (5) en utilisant la mesure RSB obtenue des transmissions d'utilisateur secondaire pour le noeud de capteur (5) correspondant ;

un moyen de sélection pour sélectionner un sous-ensemble de la pluralité de noeuds de capteur (5) sur la base des fiabilités de détection déterminées par ledit moyen de détermination ; et

un moyen de décision pour décider si des transmissions d'utilisateur primaire sont en train de transmettre en utilisant les informations de détection qui ont été reçues à partir du sous-ensemble des noeuds de capteur (5).

2. Noeud maître selon la revendication 1, dans lequel le moyen d'obtention est conçu pour obtenir la mesure RSB pour un noeud de capteur (5) particulier en recevant la mesure à partir de ce noeud de capteur (5).

3. Noeud maître selon la revendication 1, dans lequel le moyen d'obtention est exploitable pour obtenir la mesure RSB pour un noeud de capteur (5) particulier en calculant la mesure en utilisant des informations de position pour le noeud de capteur (5).

4. Noeud maître selon l'une quelconque des revendications 1 à 3, comprenant en outre un moyen de commande pour commander l'exploitation du noeud maître (3) et des noeuds de capteur (5) en fonction d'une décision prise par ledit moyen de décision.

**5.** Noeud maître selon la revendication 4, dans lequel le moyen de commande est exploitable pour commander l'exploitation du noeud maître (3) et des noeuds de capteur (5) afin d'arrêter leur transmission dans une bande de fréquence autorisée pour une utilisation par l'utilisateur primaire si ledit moyen de décision décide qu'un utilisateur primaire est en train de transmettre.

**6.** Noeud maître selon l'une quelconque des revendications 4 et 5, dans lequel le moyen de commande est conçu pour commander des paramètres de détection des noeuds de capteur (5) pour faire varier le nombre de noeuds de capteur (5) qui fournissent des informations de détection fiables.

**7.** Noeud de capteur pour une utilisation avec un noeud maître (3), le noeud de capteur (5) étant exploitable pour communiquer avec le noeud maître (3) dans une bande d'exploitation autorisée d'un émetteur primaire, le noeud de capteur (5) comprenant :

un moyen d'analyse pour analyser des signaux reçus au niveau du noeud de capteur (5) pour distinguer des transmissions d'utilisateur secondaire et des transmissions d'utilisateur primaire et pour générer des informations de détection indicatives du fait que le noeud de capteur (5) a détecté ou non une transmission d'utilisateur primaire ;
un moyen de détermination pour déterminer une mesure d'un rapport signal sur bruit, RSB, de transmissions d'utilisateur secondaire reçues par le noeud de capteur ; et
un moyen de signalement pour signaler la mesure RSB déterminée et les informations de détection générées au noeud maître (3).

**8.** Noeud de capteur selon la revendication 7, dans lequel le moyen de détermination est conçu pour déterminer une mesure d'un rapport signal sur bruit, RSB, de signaux reçus à partir du noeud maître (3).

**9.** Procédé réalisé par un noeud maître (3) qui communique avec une pluralité de noeuds de capteur (5) dans une bande d'exploitation autorisée d'un émetteur primaire, le procédé comprenant :

l'obtention, pour chaque noeud de capteur (5), d'une mesure d'un rapport signal sur bruit, RSB, de transmissions d'utilisateur secondaire reçues au niveau du noeud de capteur (5) ;
la réception d'informations de détection à partir des noeuds de capteur (5), les informations de détection reçues à partir d'un noeud de capteur (5) indiquant si le noeud de capteur (5) a détecté ou non une transmission d'utilisateur primaire ;
la détermination d'une fiabilité de détection de chaque noeud de capteur (5) en utilisant la mesure RSB obtenue pour le noeud de capteur (5) correspondant ;
la sélection d'un sous-ensemble de la pluralité de noeuds de capteur (5) sur la base des fiabilités de détection déterminées par ledit moyen de détermination ; et
le fait de décider si un utilisateur primaire est en train de transmettre en utilisant les informations de détection qui ont été reçues à partir du sous-ensemble des noeuds de capteur (5).

**10.** Procédé selon la revendication 11, dans lequel l'étape d'obtention obtient la mesure RSB pour un noeud de capteur (5) particulier en recevant la mesure à partir de ce noeud de capteur (5).

**11.** Procédé selon l'une quelconque des revendications 9 et 10, comprenant en outre la commande de l'exploitation du noeud maître (3) et des noeuds de capteur (5) en fonction d'une décision prise à ladite étape de décision.

**12.** Procédé réalisé par un noeud de capteur qui communique avec un noeud maître (3) dans une bande d'exploitation autorisée d'un émetteur primaire, le procédé comprenant :

l'analyse de signaux reçus au niveau du noeud de capteur (5) pour distinguer des transmissions d'utilisateur secondaire et des transmissions d'utilisateur primaire et pour générer des informations de détection indicatives du fait que le noeud de capteur (5) a détecté ou non une transmission d'utilisateur primaire ;
la détermination d'une mesure d'un rapport signal sur bruit, RSB, de transmissions d'utilisateur secondaire reçues par le noeud de capteur ; et
le signalement de la mesure RSB déterminée et des informations de détection générées au noeud maître (3).

Fig. 1

EP 2 826 271 B1

Fig. 2

USER INTERFACE — 229

CONTROLLER — 227

TRANCEIVER CIRCUITRY — 223

ANTENNA — 225

MEMORY — 237

OPERATING SYSTEM — 239

COMMUNICATION MODULE — 241

POSITIONING MODULE — 243

ANALYSIS MODULE — 245

MEASUREMENT MODULE — 246

REPORTING MODULE — 247

TRANSMISSION FREQUENCY CONTROL MODULE — 249

5

Fig. 3

NETWORK INTERFACE 329 ⟷ CONTROLLER 327 ⟷ TRANCEIVER CIRCUITRY 323 ⟷ ANTENNA 325

MEMORY 337

OPERATING SYSTEM 339

COMMUNICATION MODULE 341

POSITIONING MODULE 342

BAND ASSIGNMENT MODULE 343

RELIABILITY ANALYSIS MODULE 345

DECISION MODULE 347

CONTROL MODULE 349

KNOWLEDGE BASE 351

3

Fig. 4A

Fig. 4B

## Fig. 5A

## Fig. 5B

Fig. 5C

Fig. 5D

Fig. 5E

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007031956 A2

- US 2010317391 A1

**Non-patent literature cited in the description**

- **YI ZHENG et al.** *Cooperative Spectrum Sensing Based on SNR Comparison in Fusion Center for Cognitive Radio,* 22 January 2009